# EUROPEAN PATENT APPLICATION

(11) **EP 3 799 027 A1**
(43) Date of publication of application: **31.03.2021**
(21) Application number: 19807859.4
(22) Date of filing: 10.05.2019
(51) Int. Cl.: G09G 5/00, G02B 27/02, G06F 3/01, G06F 3/0481, G09G 5/36, G09G 5/38

(54) **INFORMATION PROCESSING DEVICE, INFORMATION PROCESSING METHOD, AND PROGRAM**

(30) Priority: 22.05.2018 JP 2018098130
(71) Applicant: Sony Corporation, 108-0075 Tokyo (JP)
(72) Inventor: ISHIKAWA, Tsuyoshi, Tokyo 108-0075 (JP); SHIMIZU, Junichi, Tokyo 108-0075 (JP); SHIMIZU, Takayoshi, Tokyo 108-0075 (JP); TAKAHASHI, Kei, Tokyo 108-0075 (JP); YASUDA, Ryouhei, Tokyo 108-0075 (JP)
(74) Representative: MFG Patentanwälte Meyer-Wildhagen Meggle-Freund Gerhard PartG mbB
(86) International application number: PCT/JP2019/018720
(87) International publication number: WO 2019/225354

(57) **Abstract**

[Object] To provide an information processing apparatus that can suppress a user's uncomfortable feeling of a change in a video depending on a user's motion, an information processing method, and a program.

[Solving Means] An information processing apparatus according to the present technology includes a display control unit. The display control unit controls a display apparatus to display an object having a movement parallax depending on a change in a position of a user's head in a display space in which a position of a viewpoint is substantially independently controlled with respect to the change in the position of the user's head.

## Description

### Technical Field

The present technology relates to an information processing apparatus for displaying a video whose display range changes depending on an orientation of a user's head such as an omnidirectional video, an information processing method, and a program.

### Background Art

In recent years, a use of omnidirectional videos has been advancing in the field of VR (virtual reality) and the like. The omnidirectional video is captured by an imaging apparatus capable of capturing surroundings of 360°, and is open to public on websites and the like. These omnidirectional videos are videos without left and right parallax or stereo videos with parallax capable of stereoscopic viewing.

A user can view and hear such omnidirectional videos by using a head mounted display (hereinafter referred to as "HMD") or a simplified HMD of a smartphone. When the user changes the orientation of the head on a real space, rotation of the HMD is detected, and a part of the omnidirectional video is cut out depending on the rotation and is displayed on a display apparatus (for example, see Patent Literature 1). As a result, when the user moves the head so as to view the surroundings, the omnidirectional video can be viewed.

### Citation List

### Patent Literature

Patent Literature 1: Japanese Patent Application Laid-open No. 2017-102297

### Disclosure of Invention

### Technical Problem

However, in the display method as described in Patent Literature 1, the user may feel uncomfortable with respect to a relationship between a user's sense of equilibrium and a change in a video depending on a user's motion in the real space.

Accordingly, the present disclosure provides an information processing apparatus that can suppress a user's uncomfortable feeling of the change in the video depending on the user's motion, an information processing method, and a program.

### Solution to Problem

An information processing apparatus according to an embodiment of the present technology includes a display control unit.

The display control unit controls a display apparatus to display an object having a movement parallax depending on a change in a position of a user's head in a display space in which a position of a viewpoint is substantially independently controlled with respect to the change in the position of the user's head.

With this configuration, the object having the movement parallax corresponding to the change in the position of the user's head is displayed in the display space. Therefore, even if the position of the viewpoint of the display space is substantially unchanged with respect to the change in the position of the user's head, the user can suppress the discomfort with respect to the display space by visually recognizing the object having the movement parallax.

The display control unit may change the object from a non-display state to a display state depending on the change in the position of the user's head.

The display control unit may change a state of the object from the display state to the non-display state if the position of the user's head is not substantially changed after the state of the object is changed to the display state.

The display control unit may detect a translational movement of the position of the user's head as the change in the position of the user's head, and may change the display space with respect to a rotational movement of the user's head while substantially not change the display space with respect to the translational movement of the user's head.

The display control unit may change the object from the non-display state to the display state depending on a change in the display space.

The display control unit may change the display space depending on the change in the position of the viewpoint.

The change in the position of the viewpoint may correspond to a shake of a camera acquiring the display space.

The object may be a user interface for operation.

The display control unit may localize the object in the display space.

The display control unit may fix the object within a predetermined distance from the viewpoint of the display space.

The display space may be a video wider than a field of view of the user.

The display space may be an omnidirectional video.

The display may be a head mounted display.

The display control unit may generate the movement parallax on the basis of an output of a six-degree-of-freedom sensor for detecting rotation and movement of the head mounted display.

In an information processing method according to an embodiment of the present technology, a display control unit controls a display apparatus to display an object having a movement parallax depending on a change in a position of a user's head in a display space in which a position of a viewpoint is controlled substantially independently with respect to the change in the position of the user's head.

A program according to an embodiment of the present technology causes an information processing apparatus to function as a display control unit that controls a display apparatus to display an object having a movement parallax depending on a change in a position of a user's head in a display space in which a position of a viewpoint is substantially independently controlled with respect to the change in the position of the user's head.

### Advantageous Effects of Invention

As described above, according to the present technology, it is possible to provide an information processing apparatus that can suppress a user's uncomfortable feeling of the change in the display space depending on the user's motion, an information processing method, and a program. Note that the effects described here are not necessarily limitative, and any of the effects described in the present disclosure may be provided.

### Brief Description of Drawings

[Fig. 1] Fig. 1 is a schematic diagram showing a configuration of a video display system according to an embodiment of the present technology.
[Fig. 2] Fig. 2 is a block diagram showing a functional configuration of the video display system.
[Fig. 3] Fig. 3 is an example of an in-field video generated by an in-field video generating unit of the video display system.
[Fig. 4] Fig. 4 is an example of objects generated by an object generating unit of the video display system.
[Fig. 5] Fig. 5 is an example of a display video generated by a video synthesizing unit of the video display system.
[Fig. 6] Fig. 6 is a flowchart showing an operation of the video display system.
[Fig. 7] Fig. 7 is a schematic diagram showing a virtual positional relationship between a user and the objects in the video display system.
[Fig. 8] Fig. 8 is a schematic diagram showing a change in the display video along with translation of the user in the video display system.
[Fig. 9] Fig. 9 is a schematic diagram showing the display video in a case where shake occurs in an omnidirectional video in the video display system.
[Fig. 10] Fig. 10 is a schematic diagram showing types of the objects for suppressing VR sickness in the video display system.
[Fig. 11] Fig. 11 is a schematic diagram showing the object for operation in the video display system.
[Fig. 12] Fig. 12 is a graph showing a display mode of the object in the video display system.
[Fig. 13] Fig. 13 is a schematic diagram showing the object for suppressing the VR sickness and the object for operation in the video display system.
[Fig. 14] Fig. 14 is a schematic diagram showing display positions of the objects in the video display system.
[Fig. 15] Fig. 15 is a schematic diagram showing display positions of the objects in the video display system.
[Fig. 16] Fig. 16 is a block diagram showing a hardware configuration of an information processing apparatus included in the video display system.

### Mode(s) for Carrying Out the Invention

First, an outline of a video display system according to an embodiment of the present invention will be described. The video display system includes a display apparatus and an information processing apparatus. As will be described later, the information processing apparatus substantially independently controls a position of a viewpoint in a display space (virtual space) with respect to a change in a position of a user' head. In addition, the information processing apparatus controls the display apparatus (HMD (Head Mounted Display)) which displays an object having a movement parallax depending on the change in the position of the user's head. Note that the video display system of the present disclosure may include various display apparatuses configured to cover substantially all of a field of view of the user instead of the HMD. "Covering substantially all of the field of view of the user" may be regarded as providing a video having a viewing angle that is wider than the field of view of the user. For example, the video display system may include a head mounted projector that projects a virtual space on a real space instead of the HMD. Alternatively, the video display system may include a projector which is provided separately from the information processing apparatus and projects the video in the virtual space depending on the user's motion.

Next, an example of a problem to be solved by the information processing apparatus according to the present disclosure will be described.

In video viewing and hearing by a general HMD, the user may feel uncomfortable with respect to a relationship between a user's sense of equilibrium and the change in a video (for example, omnidirectional video) depending on the user's motion (motion state) in the real space. The user's discomfort can be regarded as an autonomic dysphoric state (VR sickness) due to a discrepancy between the user's sense of equilibrium in real space and the change in the video.

For example, in the viewing and hearing of the omnidirectional video, even if the user moves (translates) without changing the direction of the head, the position of the viewpoint of the omnidirectional video does not change, and therefore, the display video is not changed. As a result, the VR sickness is easy to occur because visual feedback does not occur in the movement of the user.

Alternatively, if a shake occurs in the display video by a shake of an capturing device at the time of capturing the omnidirectional video, etc., the user misunderstands that the user shakes oneself, and there is a discrepancy between the change in the video and the sense of equilibrium, and the VR sickness is easy to occur.

In view of the above circumstances, the video display system according to the present disclosure solves the problem relating to the discrepancy between a change in the display space and the user's sense of equilibrium. Hereinafter, a case where the video display system includes the HMD will be described in detail.

### [Configuration of video display system]

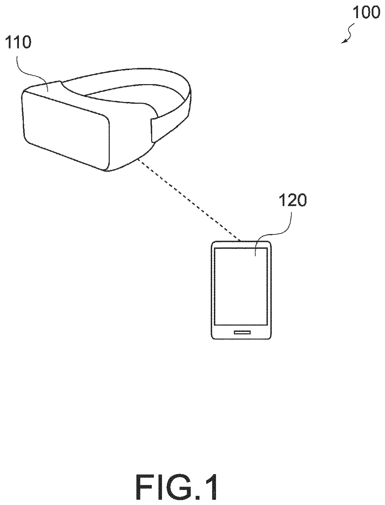

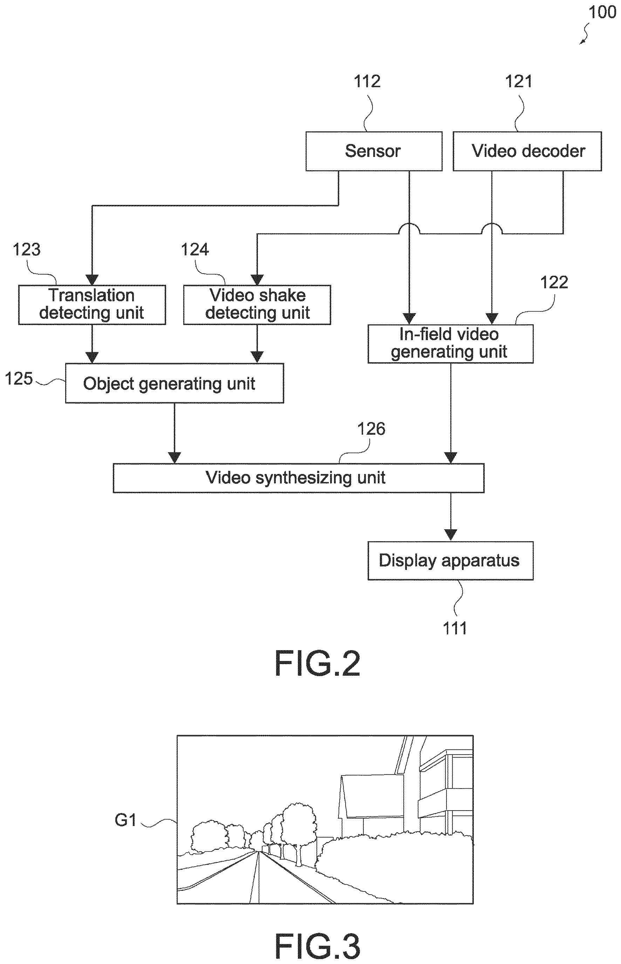

Fig. 1 is a schematic diagram showing a configuration of a video display system 100 according to the present embodiment, and Fig. 2 is a block diagram showing a functional configuration of the video display system 100.

As shown in Figs. 1 and 2, the video display system 100 includes an HMD 110 and an information processing apparatus 120.

The HMD 110 is a display that is attached to the user's head and includes a display apparatus 111 and a sensor 112. The HMD 110 may be a general HMD or the simplified HMD including a smart phone and a device for attaching the smart phone to the user's head.

The display apparatus 111 is a display apparatus such as a liquid crystal display or an organic EL display. The display apparatus 111 may include different display screens for a right eye and a left eye of the user, or may include only one display screen.

The sensor 112 detects a movement of the HMD 110. The sensor 112 can utilize a six degrees of freedom sensor (6DoF) that can detect rotation of three axes of yaw, roll and pitch and movements of three directions of front and rear, right and left, and up and down. Hereinafter, a detection result by the sensor 112 is referred to as sensor information. Incidentally, the sensor 112 may be an IMU (inertial measurement unit) or various combinations such as a gyro sensor and an acceleration sensor. It should be noted that a function to detect acceleration of the sensor 112 may be replaced by a camera mounted on the HMD 110 or a variety of sensors such as an external sensor provided separately from the HMD 110.

The information processing apparatus 120 is an information processing apparatus such as a smart phone, a tablet-type computer and a personal computer, and is connected to the HMD 110 by wired communication or wireless communication. The information processing apparatus 120 includes a video decoder 121, an in-field video generating unit 122, a translation detecting unit 123, a video shake detecting unit 124, an object generating unit 125, and a video synthesizing unit 126.

The video decoder 121 acquires and decodes omnidirectional video data (hereinafter referred to as video data). The omnidirectional video is an omnidirectional video of 360° centering on a certain point, a video captured by an omnidirectional camera, and a video obtained by synthesizing videos captured by using a plurality of cameras.

The video decoder 121 may acquire the video data by reading the video data stored in the information processing apparatus 120, or may acquire the video data via a network.

When the video decoder 121 acquires the video data, the video decoder 121 decodes the video data and generates the omnidirectional video. The video decoder 121 supplies the generated omnidirectional video to the in-field video generating unit 122 and the video shake detecting unit 124.

The in-field video generating unit 122 generates an in-field video, which is a video to be displayed on the display apparatus 111, from the omnidirectional video supplied from the video decoder 121. Fig. 3 shows an in-field video G1 that is an example of the in-field video.

The in-field video generating unit 122 acquires the sensor information from the sensor 112, and can generate the in-field video by extracting a portion of the omnidirectional video depending on the orientation of the HMD 110. When the sensor 112 detects the rotation of the three axes of yaw, roll and pitch, the in-field video generating unit 122 moves the range to be the in-field video in the omnidirectional video depending on the rotation.

As a result, when the user moves the head, the area of the in-field video in the omnidirectional video moves following the movement of the HMD 110, and the user can view and hear the omnidirectional video as if the user looks around. That is, the display space in which the position of the viewpoint is substantially independently controlled with respect to the change in the position of the user's head is formed by the omnidirectional video realized by the in-field video.

The translation detecting unit 123 acquires the sensor information from the sensor 112 and detects the translation of the HMD 110. The translation of the HMD 110 is the movement of the HMD 110 without rotation, specifically is a case that the rotation of the three axes of yaw, roll and pitch is not detected by the sensor 112 and the movements of three directions of front and rear, right and left, and up and down are detected. It should be noted that the translation of the HMD 110 may be regarded as corresponding to the translational movement of the user's head. In addition, the rotation of the HMD 110 may also be regarded as corresponding to a rotational movement of the user's head.

The translation detecting unit 123 holds a predetermined threshold value for the movement, and if the threshold value of the movement exceeds the predetermined value, it can be determined that the HMD 110 is translating. The predetermined threshold value for the movement may be set such that an unconscious swinging of the user's head is not detected as the translational movement and an explicit peeping motion of the user is detected. The translation detecting unit 123 supplies a determination result to the object generating unit 125. Incidentally, the translation detecting unit 123 may hold the predetermined threshold value for the rotation, and determine the translation of the HMD 110 only in a case where the threshold value of the rotation is less than the predetermined value.
supplies.

The video shake detecting unit 124 acquires the omnidirectional video from the video decoder 121 and detects the shake of the omnidirectional video. The shake of the omnidirectional video is caused by the shake of the camera or the like at the time of capturing the omnidirectional video.

The video shake detecting unit 124 can detect the shake of the omnidirectional video by image processing on the omnidirectional video. The video shake detecting unit 124 can detect the shake of the omnidirectional video using an optical flow, for example. The optical flow refers to a displacement vector of the object between adjacent frames caused by the movement of the object or the camera.

Further, the video shake detecting unit 124 can also detect the video of the omnidirectional video using an IMU sensor log included in the omnidirectional video. The IMU sensor log is a log of the IMU sensor provided in a capturing camera at the time of capturing the omnidirectional video, and can detect the shake of the capturing camera, that is, the shake of the omnidirectional video, from the IMU sensor log.

In a case where the shake of the omnidirectional video detected on the basis of the image processing, the IMU sensor log or the like exceeds the threshold value, the video shake detecting unit 124 can determine that the shake occurs in the omnidirectional video. The video shake detecting unit 124 supplies a determination result to the object generating unit 125.

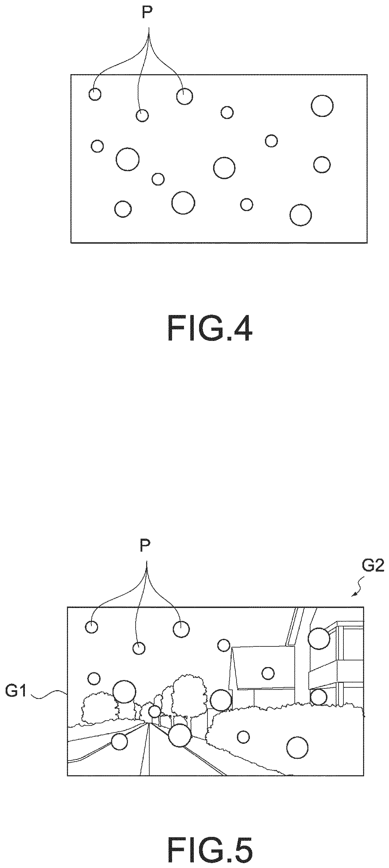

The object generating unit 125 generates a virtual object to be displayed on the display apparatus 111. Fig. 4 is a schematic diagram showing objects P generated by the object generating unit 125.

The object generating unit 125 generates the objects P as the objects each having the movement parallax according to the change in the position of the user's head in the display space, and localizes the objects P in the display space. The object generating unit 125 supplies the generated objects P to the video synthesizing unit 126. Thus, even if the user wearing the HMD 110 translates in real space, the objects P are substantially fixed at predetermined positions with respect to the viewpoint of the display space, and the objects P do not move together with the user. For example, the objects P may be fixed within a predetermined distance from the viewpoint (center) of the display space when viewed from the user.

The object generating unit 125 may generate the objects P on condition that the translation of the HMD 110 is detected by the translation detecting unit 123 so as not to prevent the user from viewing and hearing the video. In addition, the object generating unit 125 may generate the objects P on condition that the video shake detecting unit 124 detects the shake of the omnidirectional video. Incidentally, instead of the translation detecting unit 123 or the video shake detecting unit 124, the object generating unit 125 may switch the display state and the non-display state of the objects P in accordance with a manual operation with respect to a mobile controller separate from the HMD 110.

The video synthesizing unit 126 synthesizes the in-field video G1 supplied from the in-field video generating unit 122 and the objects P supplied from the object generating unit 125, and generates the display video.

Fig. 5 is an example of a display video G2 generated by the video synthesizing unit 126. As shown in Fig. 5, the video synthesizing unit 126 superimposes the in-field video G1 and the objects P to generate the display video G2. The video synthesizing unit 126 supplies the synthesized display video G2 to the display apparatus 111 to display the display video G2.

The video display system 100 has the configuration described above. Note that the in-field video generating unit 122, the translation detecting unit 123, the video shake detecting unit 124, the object generating unit 125, and the video synthesizing unit 126 control the display apparatus 111 so as to display the display video including the objects P on the display apparatus 111. At least one of the in-field video generating unit 122, the translation detecting unit 123, the video shake detecting unit 124, the object generating unit 125, and the video synthesizing unit 126 may be considered to function as the display control unit of the present disclosure. More specifically, the display control unit of the present disclosure may be considered to include at least the in-field video generating unit 122, the object generating unit 125, and the video synthesizing unit 126. Preferably, the display control unit may be considered to include at least one of the translation detecting unit 123 and the video shake detecting unit 124. Incidentally, the display control unit may include at least a processor (CPU 1001 or GPU 1002) described later.

In addition, the video display system 100 may include only one of the translation detecting unit 123 and the video shake detecting unit 124.

The video decoder 121, the in-field video generating unit 122, the translation detecting unit 123, the video shake detecting unit 124, the object generating unit 125, and the video synthesizing unit 126 are functional configurations realized by cooperation of hardware and a program, which will be described later.

### [Operation of video display system]

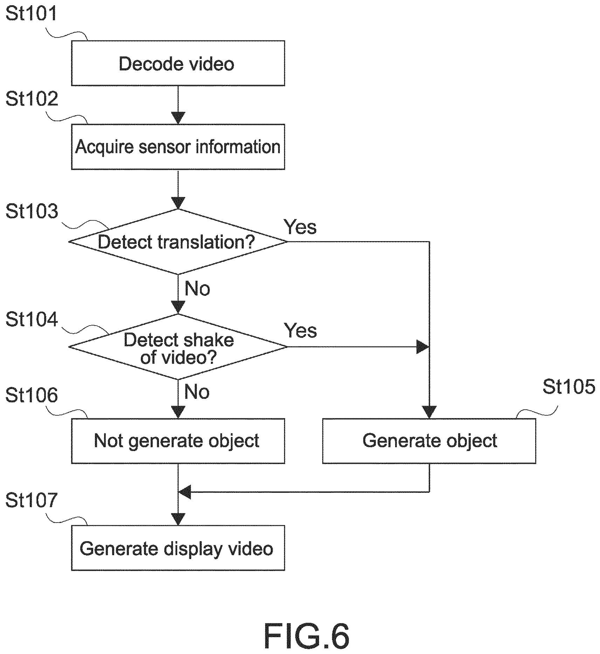

Fig. 6 is a flowchart showing an operation of the video display system 100.

As shown in Fig. 6, the video decoder 121 acquires and decodes video data of the omnidirectional video (St101).

The in-view video generating unit 122 acquires the sensor information from the sensor 112 (St102), and generates the in-field video from the omnidirectional video based on the sensor information.

Subsequently, when the translation detecting unit 123 detects the translation of the HMD 110 (St103: Yes) or the video shake detecting unit 124 detects the shake of the omnidirectional video (St104: Yes), the object generating unit 125 generates the objects P (St105).

In addition, if the translation of the HMD 110 and the shake of the omnidirectional video are not detected (St103: No, St104: No), the object generating unit 125 does not generate the objects P (106).

If the objects P are generated, the video synthesizing unit 126 synthesizes the objects P and the in-field video to generate the display video (St107). In addition, if the objects P are not generated, the video synthesizing unit 126 sets the in-field video as the display video (St107). The video synthesizing unit 126 outputs the generated display video to the display apparatus 111 and displays them on the display apparatus 111.

As described above, in the video display system 100, if the translation of the HMD 110 and the shake of the omnidirectional video are not detected, the display video including no objects P is generated, and if the translation of the HMD 110 is detected, the display video including the objects P is generated.

That is, the video display system 100 changes the objects P from the non-display state to the display state depending on the change in the position of the user's head. Note that in the non-display state, the object generating unit 125 may generate the objects P having complete invisibility, or may generate the objects P having smaller visibility than that in the display state. The visibility of the object P can be adjusted, for example, by transparency of the objects P.

In addition, in the video display system 100, the display video including the objects P is generated even in a case where the shake of the omnidirectional video is detected.

That is, the video display system 100 changes the objects P from the non-display state to the display state depending on the change in the display space corresponding to the change in the position of the viewpoint. Also in this case, in the non-display state, the object generating unit 125 may generate the objects P having no complete visibility, or may generate the objects P having smaller visibility than that in the display state.

### [Effects of image display system]

The video display system 100 will be described. If the user wearing the HMD 110 moves translationally, i.e., without rotating the HMD 110, since the rotation of the HMD 110 is not detected by the sensor 112, the in-field video generating unit 122 does not move the range to be the in-field video in the omnidirectional video.

Therefore, although the user is moving, the in-field video does not change, and the visual feedback does not occur in the movement of the user depending on the in-field video. Here, in the video display system 100, the objects P localized in the display space as described above are displayed in the display video.

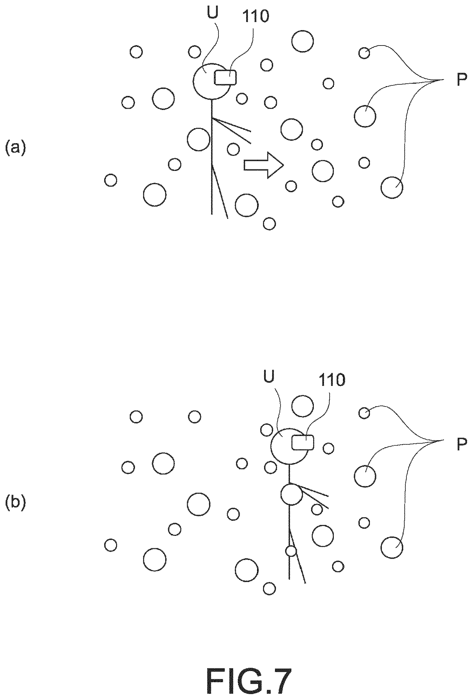

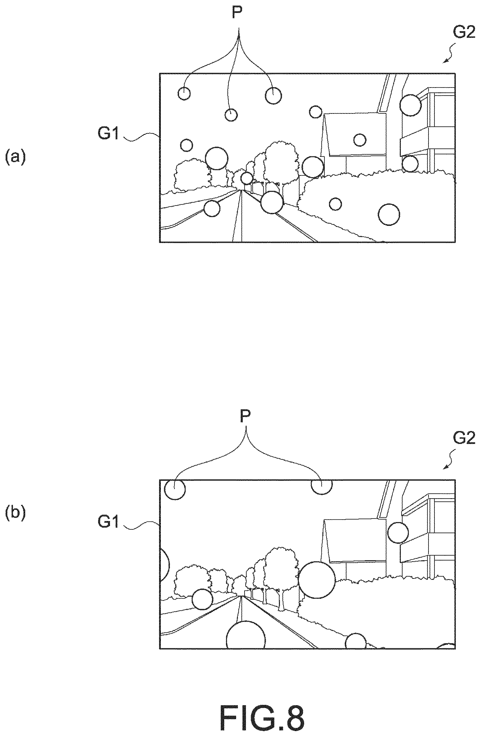

Fig. 7 is a schematic diagram showing a virtual positional relationship between a user U wearing the HMD 110 and the objects P. Fig. 8 shows an example of the display video G2 displayed on the HMD 110.

As shown in Fig. 7(a), if the user U starts translating, the display video G2 shown in Fig. 8(a) is displayed on the display apparatus 111. Even if the user U moves to the position of Fig. 7(b), the in-field video G1 does not change as shown in Fig. 8(b).

On the other hand, as shown in Fig. 7(b), since the positions of the objects P in the real space do not change, as shown in Fig. 8 (b), the objects P are displayed so as to approach the user U along with the translation of the user U.

The user U can recognize own movement by the proximity of the objects P, i.e., it is possible to obtain the visual feedback by the objects P, to thereby preventing the VR sickness.

Further, if the shake in the omnidirectional video is caused by the shake or like of the camera at the time of capturing the omnidirectional video, the shake also occurs in the in-field video which is a portion of the omnidirectional video. For this reason, the user U misunderstands that the user shakes oneself due to the in-field video.

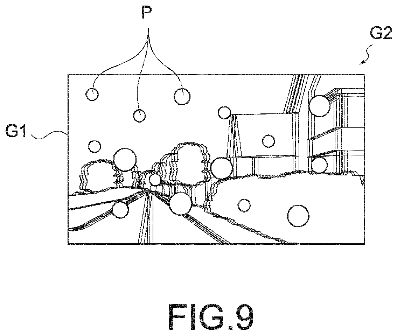

Here, in the video display system 100, the objects P generated separately from the in-field video are presented to the user U together with the in-field video. Fig. 9 shows an example of the display video G2 in the case where the shake occurs in the omnidirectional video. As shown in Fig. 9, even if the shake occurs in the in-field video G1, the shake does not occur in the objects P, and the user can recognize that the user does not shake oneself, so that it is possible to prevent the VR sickness.

### [Object type]

As described above, the objects P may be virtual objects each having the motion parallax depending on the change in the position of the user's head in the display space, and may utilize two types of objects for suppressing the VR sickness and for operation.

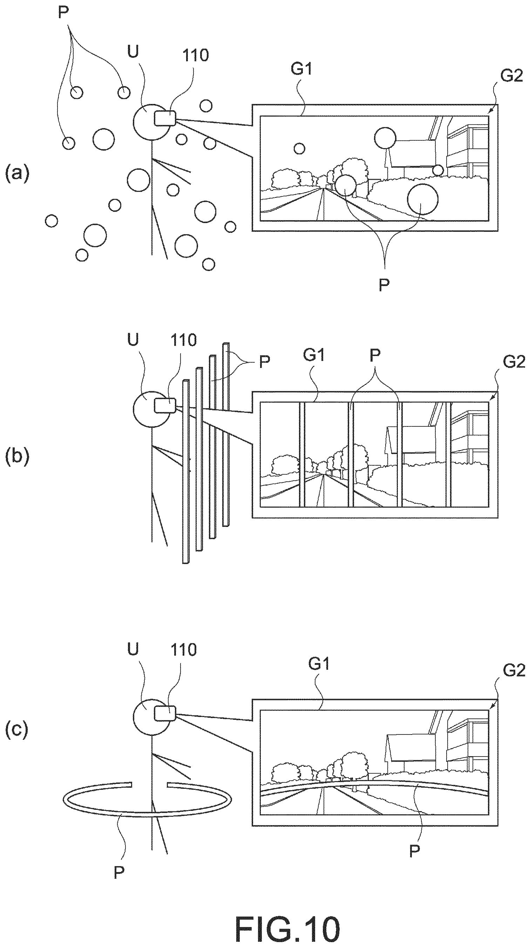

Fig. 10 is a schematic diagram showing an example of the objects P for suppressing the VR sickness. As shown in Fig. 10(a), the objects P can be particle objects arranged around the user U. The particulate objects P preferably have a size and a density that do not obstruct the field of view of the user U.

Also, as shown in Fig. 10(b), the objects P may be iron lattice objects arranged in front of the user. As a result, it is possible to make an expression such that the user U is watching the omnidirectional video from a cage.

Further, as shown in Fig. 10(c), the object P may be a handle-like object arranged around the user U. This makes it possible to strongly perceive that the user U oneself is not moving in a case where in the case where the shake occurs in the omnidirectional video.

In addition, the objects P for suppressing the VR sickness can be selected appropriately depending on content of the omnidirectional video and a type of an application that presents the omnidirectional video. The visibility of the objects P can also be adjusted depending on the content and the type of the application.

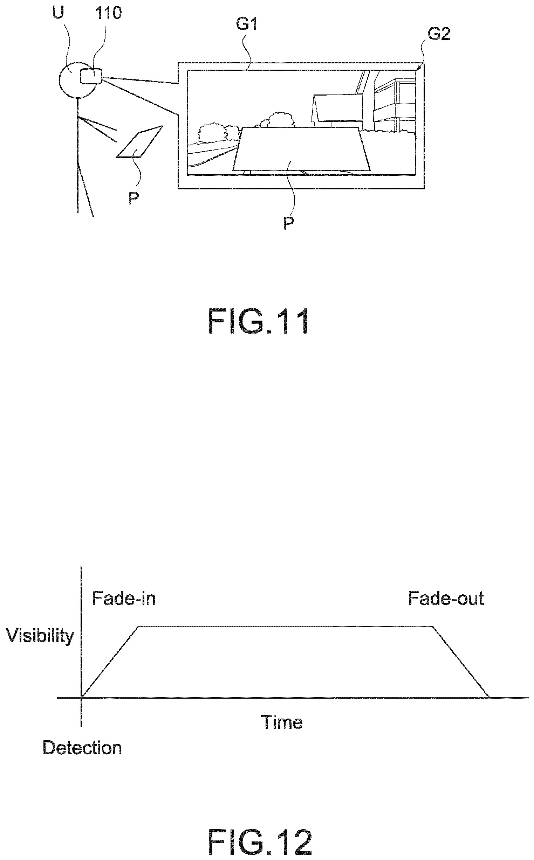

Fig. 11 is a schematic diagram showing an example of the object P for operation. As shown in Fig. 11, the object P may be an object that functions as an operation UI (user interface) such as a virtual keyboard or a virtual control panel.

A type and visibility of the object P for operation can also be adjusted depending on the content and the type of the application.

In addition, the object generating unit 125 may simultaneously generate both the object for suppressing the VR sickness and the object for operation as the object P.

### [Displaying objects]

As described above, the object generating unit 125 generates the objects P in a case where the translation detecting unit 123 detects the translation of the HMD 110 or in a case where the video shake detecting unit 124 detects the shake of the omnidirectional video.

Fig. 12 is a graph showing a display mode of the object P by the object generating unit 125. As shown in Fig. 12, when the translation of the HMD 110 or the shake of the omnidirectional video is detected, the object generating unit 125 puts the object P into the display state by using the detection as a trigger. At this time, the object generating unit 125 can make an expression such that the visibility of the object P is gradually increase and is faded in with respect to the display video.

The object generating unit 125 can change the object P from the display state to the non-display state in a case where the position of the user's head does not substantially change for a certain period of time and the shake is not detected in the omnidirectional video after the object P is put into the display state.

At this time, the object generating unit 125 can make an expression such that the visibility of the object P is gradually decreased and the object P is faded out from the display video.

Note that the object generating unit 125 may not necessarily generate the object P by using the translation of the HMD 110 or the shake of the omnidirectional video as the trigger. For example, in a case where the object P is the object for operation, the object generating unit 125 may generate the object P using a gesture of the user U or an operation input to the information processing apparatus 120 as the trigger.

The object generating unit 125 redisplays the object P in a case where the trigger occurs again after the object P is in the non-display state. Here, if the object P is the object for suppressing the VR sickness, it may be redisplayed at a previously displayed position, or it may be redisplayed relative to a current position of the user U.

Further, if the object P is the object for operation, the object generating unit 125 preferably redisplays the object P relative to the current position of the user U so that the user U easily operates. Note that the object for operation is inappropriate when it is displayed at a position fixed to the user U during a display period. This is because if the display is continued at the fixed position to the user U, there is no visual feedback on the translation of the user U.

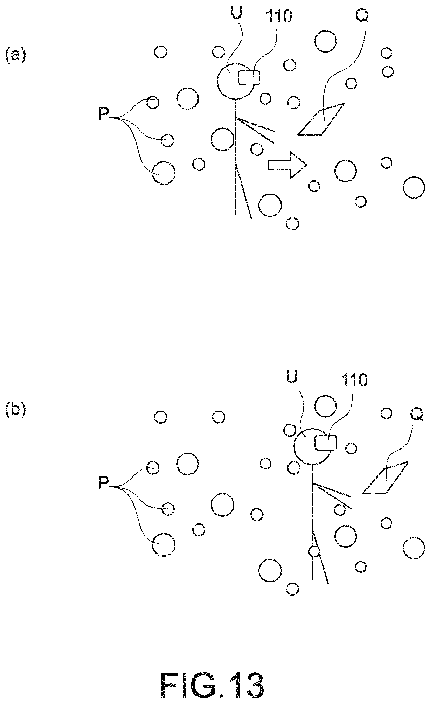

In this case, it is preferable that the object generating unit 125 generates the object for suppressing the VR sickness in accordance with the object for operation. Fig. 13 is a schematic diagram showing a state in which the objects P for suppressing the VR sickness and an object Q for operation are arranged. As shown in Figs. 13(a) and 13(b), the object Q for operation is not localized in the display space dissimilar to the objects P, and the positional relationship with respect to the HMD 110 in the display space is fixed.

Note that the object generating unit 125 can also generate the objects P at all times while the in-field video is displayed, for example, when the visibility of the objects P is small.

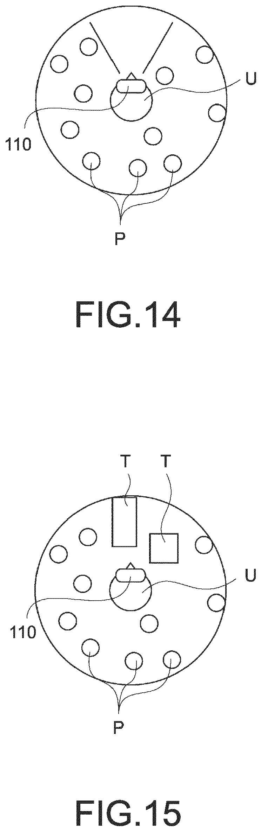

Figs. 14 and 15 are schematic diagrams showing a suitable arrangement of the objects P. Since the field of view of the user U is obstructed when the objects P are arranged in front of the user U, it is preferable that the object generating unit 125 arranges the objects P while avoiding the front of the user U as shown in Fig. 14.

Further, in a case where the omnidirectional video is an omnidirectional video with parallax, the distance between the objects in the video and the user U can be acquired. In this case, as shown in Fig. 15, it is preferable that the object generating unit 125 arranges the objects P while avoiding a place where objects T in the video exist.

### [Hardware configuration]

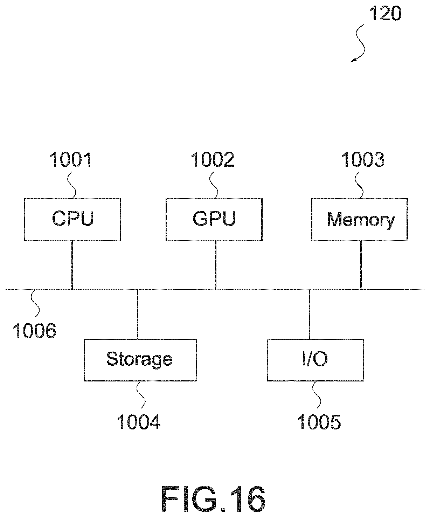

Fig. 16 is a schematic diagram showing a hardware configuration of an information processing apparatus 120. As shown in Fig. 16, the information processing apparatus 120 includes a CPU 1001, a GPU 1002, a memory 1003, a storage 1004, and an input/output unit (I/O) 1005 as a hardware configuration. These are connected to each other by a bus 1006.

The CPU (Central Processing Unit) 1001 controls other configurations according to a program stored in the memory 1003, performs data processing according to a program, and stores processing result in the memory 1003. The CPU 1001 can be a microprocessor.

The GPU (Graphic Processing Unit) 1002 performs the image processing under the control of CPU 1001. The GPU 1002 may be a microprocessor.

The memory 1003 stores a program and data to be executed by the CPU 1001. The memory 1003 can be a RAM (Random Access Memory).

The storage 1004 stores a program and data. The storage 1004 may be an HDD (hard disk drive) or an SSD (solid state drive).

The input/output unit 1005 receives an input to the information processing apparatus 120, and supplies an output of the information processing apparatus 120 to outside. The input/output unit 1005 includes an input device such as a touch panel or a keyboard, an output device such as a display, and a connection interface such as a network.

The hardware configuration of the information processing apparatus 120 is not limited to the hardware configuration shown here, and may be any hardware configuration capable of realizing the functional configuration of the information processing apparatus 120. In addition, part or all of the above hardware configuration may exist on a network.

### [Modification]

Although the video display system 100 includes the HMD 110 and the information processing apparatus 120 as described above, a part or all of the functional configuration of the information processing apparatus 120 may be included in the HMD 110. For example, the HMD 110 is the simplified HMD including a smartphone, and may be provided with the functional configuration of the information processing apparatus 120.

Further, among the functional configurations of the video display system 100, configurations other than the display apparatus 111 may be mounted on the information processing apparatus 120. Further, the configuration other than the display apparatus 111 may be realized by a server connected to the HMD 110 or the information processing apparatus 120 via a network.

The sensor 112 is also not limited to one mounted on the HMD 110, and may be a sensor disposed around the HMD 110 and capable of detecting a position and an orientation of the HMD 110.

In addition, although the display target video of the video display system 100 has been described as the omnidirectional video, a display target video is not limited to the omnidirectional video, and may be a video having a wider range than at least the field of view of the user and having a display range that changes depending on the orientation of the user's head.

The present technology may also have the following structures.
(1) An information processing apparatus, including:
   a display control unit that controls a display apparatus to display an object having a movement parallax depending on a change in a position of a user's head in a display space in which a position of a viewpoint is substantially independently controlled with respect to the change in the position of the user's head.
(2) The information processing apparatus according to (1), in which
   the display control unit changes the object from a non-display state to a display state depending on the change in the position of the user's head.
(3) The information processing apparatus according to (1) or (2), in which
   the display control unit changes a state of the object from the display state to the non-display state if the position of the user's head is not substantially changed after the state of the object is changed to the display state.
(4) The information processing apparatus according to (2), in which
   the display control unit detects a translational movement of the position of the user's head as the change in the position of the user's head, and changes the display space with respect to a rotational movement of the user's head while substantially not changes the display space with respect to the translational movement of the user's head.
(5) The information processing apparatus according to any one of (1) to (4), in which
   the display control unit changes the object from the non-display state to the display state depending on a change in the display space.
(6) The information processing apparatus according to (5), in which
   the display control unit change the display space depending on the change in the position of the viewpoint.
(7) The information processing apparatus according to (6), in which
   the change in the position of the viewpoint corresponds to a shake of a camera acquiring the display space.
(8) The information processing apparatus according to any one of (1) to (7), in which
   the object is a user interface for operation.
(9) The information processing apparatus according to any one of (1) to (8), in which
   the display control unit localizes the object in the display space.
(10) The information processing apparatus according to any one of (1) to (9), in which
   the display control unit fixes the object within a predetermined distance from the viewpoint of the display space.
(11) The information processing apparatus according to any one of (1) to (10), in which
   the display space is a video wider than a field of view of the user.
(12) The information processing apparatus according to any one of (1) to (11), in which
   the display space is an omnidirectional video.
(13) The information processing apparatus according to any one of (1) to (12), in which
   the display apparatus is a head mounted display.
(14) The information processing apparatus according to any one of (1) to (13), in which
   the display control unit generates the movement parallax on a basis of an output of a six-degree-of-freedom sensor for detecting rotation and a movement of the head mounted display.
(15) An information processing method, including:
   controlling by a display control unit a display apparatus to display an object having a movement parallax depending on a change in a position of a user's head in a display space in which a position of a viewpoint is controlled substantially independently with respect to the change in the position of the user's head.
(16) A program causes an information processing apparatus to function as a display control unit that controls a display apparatus to display an object having a movement parallax depending on a change in a position of a user's head in a display space in which a position of a viewpoint is substantially independently controlled with respect to the change in the position of the user's head.

### Reference Signs List

- 100: video display system
- 110: HMD
- 111: display apparatus
- 112: sensor
- 120: information processing apparatus
- 121: video decoder
- 122: in-field video generating unit
- 123: translation detecting unit
- 124: video shake detecting unit
- 125: object generating unit
- 126: video synthesizing unit

## Claims

1. An information processing apparatus, comprising:
a display control unit that controls a display apparatus to display an object having a movement parallax depending on a change in a position of a user's head in a display space in which a position of a viewpoint is substantially independently controlled with respect to the change in the position of the user's head.

2. The information processing apparatus according to claim 1, wherein
the display control unit changes the object from a non-display state to a display state depending on the change in the position of the user's head.

3. The information processing apparatus according to claim 2, wherein
the display control unit changes a state of the object from the display state to the non-display state if the position of the user's head is not substantially changed after the state of the object is changed to the display state.

4. The information processing apparatus according to claim 2, wherein
the display control unit detects a translational movement of the position of the user's head as the change in the position of the user's head, and changes the display space with respect to a rotational movement of the user's head while substantially not changes the display space with respect to the translational movement of the user's head.

5. The information processing apparatus according to claim 1, wherein
the display control unit changes the object from the non-display state to the display state depending on a change in the display space.

6. The information processing apparatus according to claim 5, wherein
the display control unit change the display space depending on the change in the position of the viewpoint.

7. The information processing apparatus according to claim 6, wherein
the change in the position of the viewpoint corresponds to a shake of a camera acquiring the display space.

8. The information processing apparatus according to claim 1, wherein
the object is a user interface for operation.

9. The information processing apparatus according to claim 1, wherein
the display control unit localizes the object in the display space.

10. The information processing apparatus according to claim 1, wherein
the display control unit fixes the object within a predetermined distance from the viewpoint of the display space.

11. The information processing apparatus according to claim 1, wherein
the display space is a video wider than a field of view of the user.

12. The information processing apparatus according to claim 11, wherein
the display space is an omnidirectional video.

13. The information processing apparatus according to claim 1, wherein
the display apparatus is a head mounted display.

14. The information processing apparatus according to claim 13, wherein
the display control unit generates the movement parallax on a basis of an output of a six-degree-of-freedom sensor for detecting rotation and a movement of the head mounted display.

15. An information processing method, comprising:
controlling by a display control unit a display apparatus to display an object having a movement parallax depending on a change in a position of a user's head in a display space in which a position of a viewpoint is controlled substantially independently with respect to the change in the position of the user's head.

16. A program causes an information processing apparatus to function as a display control unit that controls a display apparatus to display an object having a movement parallax depending on a change in a position of a user's head in a display space in which a position of a viewpoint is substantially independently controlled with respect to the change in the position of the user's head.
